# EUROPEAN PATENT APPLICATION

(11) **EP 2 869 198 A2**
(43) Date of publication of application: **06.05.2015**
(21) Application number: 14183345.9
(22) Date of filing: 03.09.2014
(51) Int. Cl.: G06F 9/50

(54) **Parallel computer system, control unit, and method of controlling parallel computer system**

(30) Priority: 01.11.2013 JP 2013228772
(71) Applicant: FUJITSU LIMITED, Kawasaki-shi, Kanagawa 211-8588 (JP)
(72) Inventor: Adachi, Tomoya, Kawasaki-shi, Kanagawa 211-8588 (JP)
(74) Representative: Ward, James Norman

(57) **Abstract**

A parallel computer system includes a plurality of computation nodes, connected with one another through a grid-shaped or a ring-shaped network in a physical space including a plurality of physical axes, and configured to execute jobs, respectively, and a control unit configured to control the plurality of computation nodes. The control unit includes an accepting unit configured to accept a job; a selection unit configured to select a computation node to which the accepted job is assigned among the plurality of computation nodes in a virtual space having a same number of dimensions of a virtual axis combining the physical axes as a number of dimensions requested by the job accepted by the accepting unit; and an instruction unit configured to instruct the parallel computer system so as to execute the job using the computation node selected by the selection unit.

## Description

### FIELD

The embodiments discussed herein are related to a parallel computer system, a control unit, a method of controlling a parallel computer system, and a control program of a control unit.

### BACKGROUND

In a parallel computer including a plurality of computation nodes, a grid-shaped mesh network is provided as one topology for an interconnect connecting the computation nodes. Here, the computation node is an information processing apparatus including a central processing unit (CPU), a main memory, a communication unit with the other computation nodes, and the like.

In a mesh network, the number of hops, that is to say, the number of paths between computation nodes through which communication is performed along the way is different depending on the combination of computation nodes that communicate with one another. Hereinafter, a pair of computation nodes having a relationship allowed to reach by one hop is expressed as "adjacent", and the path between the computation nodes is called an "adjacent path".

In a mesh network, there is a tendency toward an increase in the communication time between computation nodes as the number of hops becomes larger. Also, there are cases where when communication is performed between two different computation nodes at the same time, the performance decreases, because the same adjacent path is used.

Accordingly, when a plurality of users use part of a parallel computer at the same time, there are cases where the performance is influenced not only by the communication caused by a user job by itself, but also by the communications of the other user jobs. In order to alleviate the influence, a job is disposed on nodes that have adjacent relationships as much as possible (for example, refer to Japanese Laid-open Patent Publication Nos. 2007-206987 and 2012-252591).

A user who performs simulation on a computer often assumes a shape of three-dimensional or less, which is corresponding to the number of dimensions in a real world, as a shape of a calculation job. On the other hand, for a parallel computer system, a higher-dimensional system than a three-dimensional is being built in order to shorten a diameter (a distance between a pair of the farthest computation nodes) of a network, to improve the bi-section bandwidth, and to improve fault tolerance.

Accordingly, a related-art technique is provided in which low-dimensional grid-type logical axes of a user job request are configured to with respect to an area that is cut out from a high-dimensional grid-shaped network by combining a plurality of axes (for example, refer to Japanese Laid-open Patent Publication No. 2012-198820). In the related-art technique, a high-dimensional grid-shaped network is considered as a network produced by connecting a unit including a group of small cuboid-shaped computation nodes, which is called a "computation unit", into a large cuboid-shaped network, and a logical axis is formed by combining a small cuboid axis and a large cuboid axis.

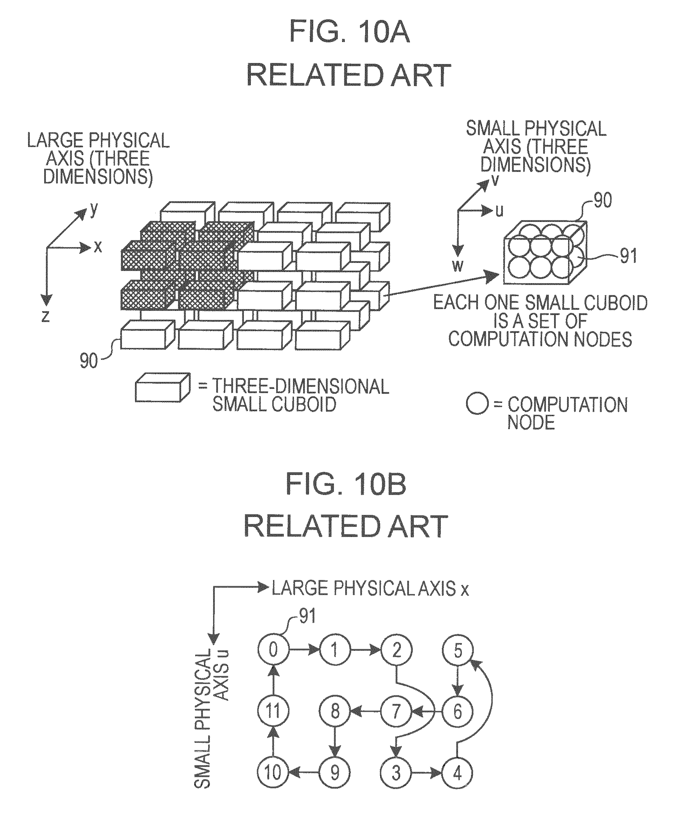

FIGs. 10A and 10B are diagrams for explaining a related-art method of assigning a job. In FIGs. 10A and 10B, large physical axes represent physical axes x, y, and z in a three-dimensional large cuboid, and small physical axes represent physical axes u, v, and w in a three-dimensional small cuboid. Also, it is assumed that a small cuboid 90 includes 3 (u = 0 to 2) × 2 (v = 0 to 1) × 2 (w = 0 to 1) = 12 computation nodes 91, and in the small cuboid 90, the computation nodes 91 are connected in the directions of the individual small physical axes in a ring-shaped state through a torus network. Also, the large cuboid includes 4 (x = 0 to 3) × 3 (y = 0 to 2) × 3 (z = 0 to 2) = 36 small cuboids 90.

In this regard, in FIGs. 10A and 10B, the three-dimensional large cuboid and the small cuboids are illustrated. Assuming that N is a positive integer, the large cuboid and the small cuboid may be an N-dimensional cuboid. Also, in FIGs. 10A and 10B, the small cuboid 90 includes 12 computation nodes 91, and the large cuboid includes 36 small cuboids 90. It is possible for the small cuboid 91 to include any number of computation nodes 91, and for the large cuboid to include any number of small cuboids 90.

FIG. 10A illustrates job assignment for each small cuboid. In FIG. 10A, a job is assigned to shaded small cuboids 90. As illustrated in FIG. 10A, in the related-art technique, the computation node 91 is cut out for each small cuboid from the large cuboid, and a job is assigned to the computation nodes 91.

FIG. 10B illustrates an example of a configuration of logical axes. In FIG. 10B, one logical axis 10 (not illustrated in the figure) is configured by combining a large physical axis x and a small physical axis u, and the axis length of the logical axis 10 is 12. Here, the fact that the axis length is 12 represents that the number of computation nodes in this axis direction is 12. As illustrated in FIG. 10B, for the logical axis 10, the job is assigned to four computation nodes 91 in the x direction, and three computation nodes 91 in the u direction, that is to say, 4 × 3 = 12 computation nodes 91 in total.

In the same manner, the same number of computation nodes 91 as that requested by the job are assigned to the directions of a logical axis l1 (not illustrated in the figure) formed by the combination of the large physical axis y and the small physical axis v, and a logical axis l2 (not illustrated in the figure) formed by the combination of the large physical axis z and the small physical axis w, respectively. Thereby, the computation nodes 91 are assigned to three-dimensional cuboid-shaped job.

This method of assignment has advantages in performance as follows.
- Difficult to be influenced by the communication of the other jobs
- Adjacent nodes in a logical space are also adjacent to each other in a physical space
- It is possible to form a logical axis to be seen by a user with a ring-shaped torus structure (advantageous in periodic boundary condition, and the like)
- Even if a failed computation node is included, it is possible to configure a logical axis having a torus structure

For an evaluation index of a parallel computer, an operating ratio of the overall computer is used in addition to application performance at the time of execution. In a parallel computer having a low operating ratio, it sometimes takes a long time until the job entered by the user is executed, and thus it becomes late when a calculation result is output.

For example, the related-art technique illustrated in FIGs. 10A and 10B has a problem in that an area to which a job is assigned is occupied for each small cuboid, and thus there are cases where a fraction is produced in the number of computation nodes at assignment time, and thus the operating ratio of the computer is liable to deteriorate.

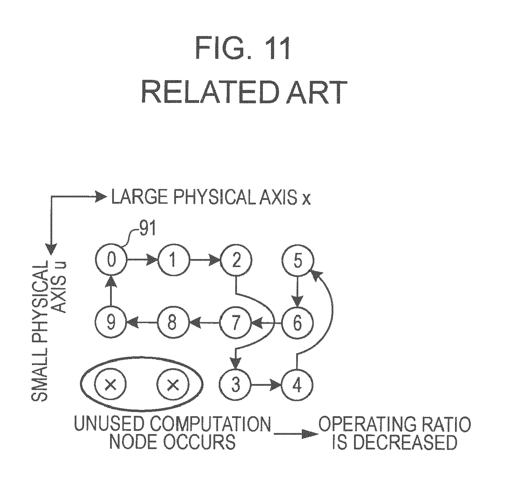

FIG. 11 is a diagram illustrating a case where a fraction is produced in the number of computation nodes. As illustrated in FIG. 11, if the axis length of a logical axis is 10, when a job is assigned for each small cuboid, two computation nodes 91 illustrated by × become unused, and thus the operating ratio is decreased.

On the other hand, if a job is assigned regardless of a connection relationship between the computation nodes, although the operating ratio improves, but the communication time between the computation nodes becomes long, and thus the application performance often decreases.

It becomes desirable to have a method of assigning a job without decreasing the application performance as much as possible, and further with giving priority to the operating ratio.

According to an embodiment of the present disclosure, it is desirable to suppress a decrease in operating ratio when a fraction of computation nodes is produced at the time of assigning a job for each small cuboid.

### SUMMARY

According to an aspect of the invention, a parallel computer system includes a plurality of computation nodes, connected with one another through a grid-shaped or a ring-shaped network in a physical space including a plurality of physical axes, and configured to execute jobs, respectively, and a control unit configured to control the plurality of computation nodes. The control unit includes an accepting unit configured to accept a job; a selection unit configured to select a computation node to which the accepted job is assigned among the plurality of computation nodes in a virtual space having a same number of dimensions of a virtual axis combining the physical axes as a number of dimensions requested by the job accepted by the accepting unit; and an instruction unit configured to instruct the parallel computer system so as to execute the job using the computation node selected by the selection unit.

### BRIEF DESCRIPTION OF DRAWINGS

FIGs. 1A and 1B are diagrams for explaining a method of assigning a job by a parallel computer system according to an embodiment;
FIG. 2 is a diagram illustrating a configuration of the parallel computer system according to the embodiment;
FIG. 3 is a diagram illustrating an example of information regarding a computation node, which is stored in a storage unit;
FIG. 4 is a diagram illustrating an example of a configuration of a computation unit;
FIG. 5 is a diagram illustrating an example of a configuration of the parallel computer;
FIG. 6 is a diagram illustrating a configuration of an execution node selection unit;
FIG. 7 is a diagram for explaining separation of a virtual axis Z;
FIG. 8 is a flowchart illustrating job assignment by a control unit according to the embodiment;
FIG. 9 is a diagram illustrating a hardware configuration of a computer that executes a control program according to the embodiment;
FIGs. 10A and 10B are diagrams for explaining a related-art method of assigning a job; and
FIG. 11 is a diagram illustrating a case where a fraction is produced in the number of computation nodes.

### DESCRIPTION OF EMBODIMENTS

In the following, a detailed description will be given of a parallel computer system, a control unit, a method of controlling a parallel computer system, and a control program of a control unit according to embodiments disclosed in the application concerned with reference to the drawings. In this regard, the embodiments will not limit the disclosed techniques.

### Embodiments

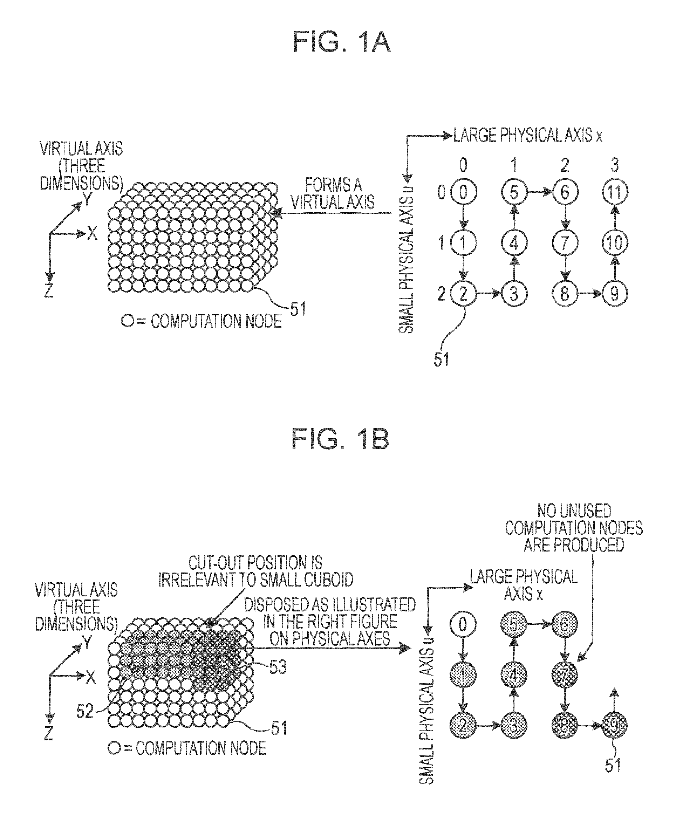

First, a description will be given of a method of assigning a job by a parallel computer system according to an embodiment. FIGs. 1A and 1B are diagrams for explaining a method of assigning a job by the parallel computer system according to an embodiment. FIG. 1A is a diagram for explaining a virtual axis, and FIG. 1B is a diagram illustrating job assignment in a virtual space. In FIGs. 1A and 1B, reference symbol O illustrates a computation node 51.

In a parallel computer system according to the embodiment, a virtual grid-shaped network having the maximum number of dimensions requested by a user's job is configured in advance, a cuboid area having a mesh structure is cut out from the virtual grid-shaped network, and the user's job is assigned to the cuboid area. The virtual grid-shaped network is configured such that adjacent nodes on the network are also adjacent with each other on the original physical network. In the following, here, it is assumed that the maximum number of dimensions requested by the user's job is three, and the number of dimensions of the parallel computer is six.

FIG. 1A illustrates a case where a virtual axis X is configured by combining the large physical axis x and the small physical axis u illustrated in FIGs. 10A and 10B. As illustrated in FIG. 1A, on the virtual axis X, on the large physical axis x = 0, three computation nodes "0" to "2", which are small physical axes u = 0, u = 1, and u = 2, are arranged. Next, on the large physical axis x = 1, three computation nodes "3" to "5", which are small physical axes u = 2, u = 1, and u = 0, are arranged. Then, on the virtual axis X, next, on the large physical axis x = 2, three computation nodes "6" to "8", which are small physical axes u = 0, u = 1, and u = 2, are arranged. Next, on the large physical axis x = 3, three computation nodes "9" to "11", which are small physical axes u = 2, u = 1, and u = 0, are arranged.

Here, the computation nodes "0" to "2", the computation nodes "3" to "5", the computation nodes "6" to "8", and the computation nodes "9" to "11" are adjacent on the small physical axis, respectively. Also, the computation node "2" and the computation node "3", the computation node "5" and the computation node "6", and the computation node "8" and the computation node "9" are adjacent with each other on the large physical axis, respectively. Accordingly, the adjacent computation nodes on the virtual axes X "0" to "11" are also adjacent on the physical axis.

In the same manner, the large physical axis y and the small physical axis v illustrated in FIG. 10A are combined to form a virtual axis Y, and the large physical axis z and the small physical axis w illustrated in FIG. 10A are combined to form a virtual axis Z. Then, in the parallel computer system according to the embodiment, in a virtual space configured by the virtual axes X, Y, and Z, a one- to three-dimensional cuboid requested by the job for each computation node is cut out, and the job is assigned to the cuboid.

FIG. 1B illustrates a case where a cuboid 52 having 6 × 3 × 3 nodes, and a cuboid 53 having 3 × 3 × 4 nodes are cut out from the virtual space. The computation nodes "1" to "6", which are adjacent in the cuboid 52 in the virtual space, are also adjacent in the physical space. Also, the computation nodes "7" to "9", which are adjacent in the cuboid 53 in the virtual space, are also adjacent in the physical space.

In this manner, in the parallel computer system according to the embodiment, a virtual axis is configured by combining the physical axes, a cuboid shape requested by the job for each computation node is cut out in the virtual space formed by the virtual axes, and the job is assigned to the cuboid. Accordingly, in the parallel computer system according to the embodiment, a fraction is not produced in the number of computation nodes unlike the case where a job is assigned for each small cuboid, and thus it is possible to restrain deterioration in the operating ratio.

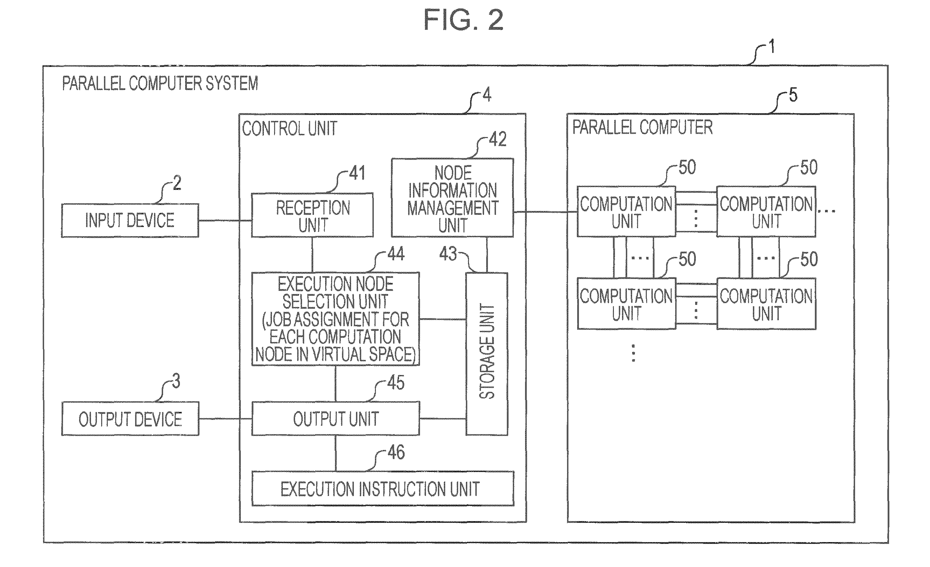

Next, a description will be given of a configuration of the parallel computer system according to the embodiment. FIG. 2 is a diagram illustrating a configuration of the parallel computer system according to the embodiment. As illustrated in FIG. 2, the parallel computer system 1 includes an input device 2, an output device 3, a control unit 4, and a parallel computer 5.

The input device 2 is a device used when the user inputs a job into the parallel computer system 1, and includes a keyboard and a mouse. The output device 3 is a device that displays a processing result of the parallel computer system 1, and is a liquid crystal display unit, and a printer.

The control unit 4 is a unit that controls the parallel computer 5. The control unit 4 accepts specification of a job and specification of the number of computation nodes 51 that execute the job from the user, and selects computation nodes 51 to which the job is assigned. Then, the control unit 4 instructs the parallel computer 5 so that the selected computation nodes 51 execute the job, receive a calculation result from the parallel computer 5, and output the calculation result to the output device 3. Also, the control unit 4 outputs a processing result of the control unit 4, such as a selection result of the computation nodes 51, or the like to the output device 3.

The control unit 4 includes an accepting unit 41, a node information management unit 42, a storage unit 43, an execution node selection unit 44, an output unit 45, and an execution instruction unit 46.

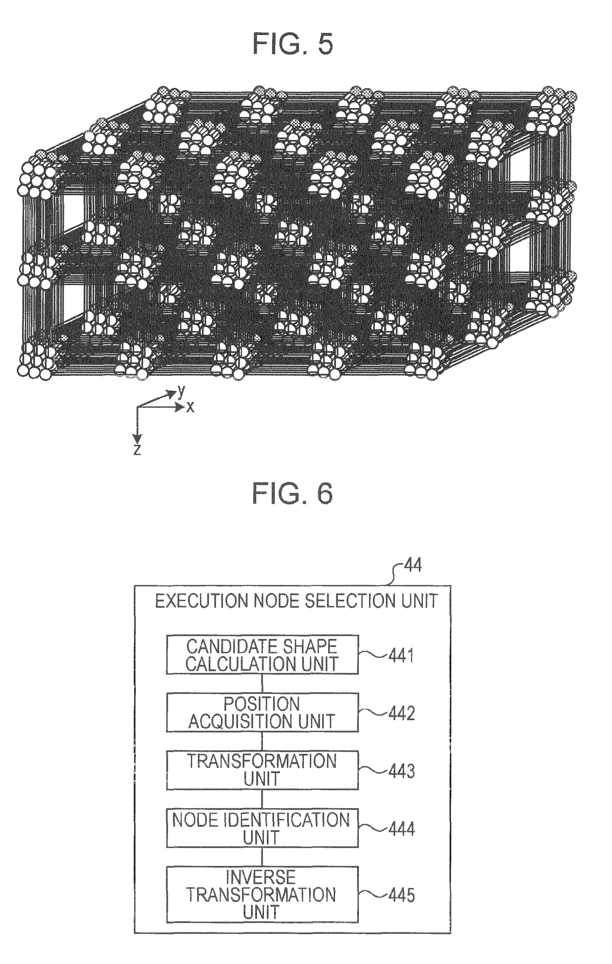

The accepting unit 41 accepts a job execution request that is input by the user using the input device 2. The job execution request includes shape specification of the computation nodes 51 that execute the job. For example, in the cuboid 52 as illustrated in FIG. 1B, 6 × 3 × 3, 3 × 6 × 3, or the like is specified.

The node information management unit 42 manages information on the computation nodes 51 using the storage unit 43. The storage unit 43 stores information on the computation nodes 51. Also, the storage unit 43 stores a selection result by the execution node selection unit 44.

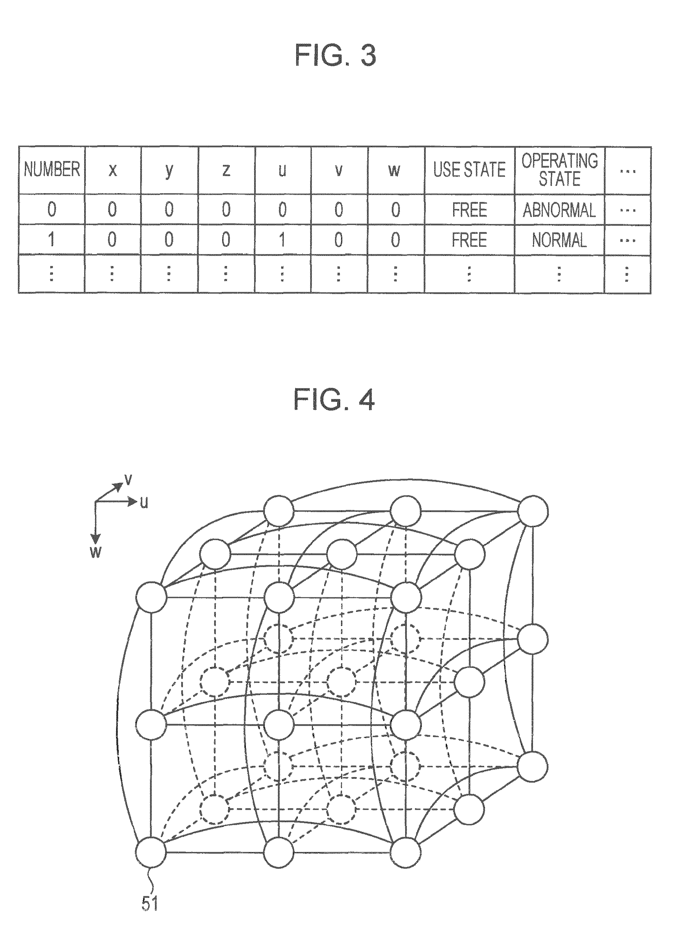

FIG. 3 is a diagram illustrating an example of information regarding the computation node 51, which is stored in the storage unit 43. As illustrated in FIG. 3, the storage unit 43 stores information including a number, x, y, z, u, v, and w, a use state, and an operating state for each computation node.

The number is an identifier that uniquely identifies a computation node 51. Reference symbols x, y, and z represent the coordinates of a small cuboid to which the computation nodes 51 belongs. That is to say, x, y, and z represent the coordinates of a computation node 51 in a three-dimensional physical space formed by the large physical axes. Reference symbols u, v, and w represent the coordinates of a computation node 51 in a small cuboid to which the computation node 51 belongs. That is to say, u, v, and w represent the coordinates of a computation node 51 in a three-dimensional physical space formed by the small physical axes.

The use state indicates whether a computation node 51 is "busy" or "free". The operating state indicates whether a computation node 51 is "abnormal" or "normal".

The execution node selection unit 44 selects a plurality of computation nodes 51 that execute the job based on a job execution request accepted by the accepting unit 41. That is to say, the execution node selection unit 44 cuts out a one- to three-dimensional cuboid requested by the job from the virtual space.

Then, the execution node selection unit 44 transforms the virtual space coordinates of the selected plurality of computation nodes 51 into physical space coordinates, and stores the physical space coordinates of the selected plurality of computation nodes 51 into the storage unit 43 in association with the identifier of the job as a result. In this regard, a detailed description of the execution node selection unit 44 will be given later.

The output unit 45 receives an execution result of the job from the execution instruction unit 46, and outputs the execution result to the output device 3. Also, the output unit 45 outputs the physical space coordinates of the plurality of computation node 51 selected by the execution node selection unit 44 to the output device 3 in association with the job.

The execution instruction unit 46 instructs the parallel computer 5 to execute the job, and outputs the execution result to the output device 3 through the output unit 45. The execution instruction unit 46 instructs the parallel computer 5 to execute the job based on the information on the selection result stored by the execution node selection unit 44 in the storage unit 43.

The parallel computer 5 is a computer in which a plurality of computation nodes 51 executes jobs in parallel. In the parallel computer 5, a plurality of computation units 50 are connected in a three-dimensional grid-shaped state. The physical space formed by the plurality of computation units 50 corresponds to a three-dimensional physical space formed by the large physical axes illustrated in FIG. 10A. In this regard, in FIG. 2, in order to simplify the figure, the case is illustrated where the computation units 50 are connected in a two-dimensional grid-shaped state, but in reality, the computation units 50 are connected in a three-dimensional grid-shaped state.

The computation unit 50 is a computer in which a plurality of computation nodes 51 are connected in a three-dimensional ring-shaped state through a torus network. The physical space formed by a plurality of computation nodes 51 corresponds to the three-dimensional physical space formed by the small physical axes illustrated in FIG. 10A, and the computation unit 50 corresponds to the small cuboid 90 illustrated in FIG. 10A.

FIG. 4 is a diagram illustrating an example of a configuration of the computation unit 50. As illustrated in FIG. 4, the computation unit 50 includes 3 × 3 × 3 = 27 computation nodes 51. The three computation nodes 51 disposed in the direction of each of the small physical axes are connected to one another. In this regard, here, the computation unit 50 includes 27 computation nodes 51. However, the computation unit 50 may include i × j × k computation nodes 51 where i, j, and k are three any integers.

FIG. 5 is a diagram illustrating an example of a configuration of the parallel computer 5. In FIG. 5, 5 × 3 × 3 = 45 computation units 50 are connected in a three-dimensional grid-shaped network. As illustrated in FIG. 5, in each of the computation units 50, computation nodes 51 having the same values of u, v, and w are connected in a three-dimensional grid-shaped state.

Accordingly, the individual computation units 50 are connected in a three-dimensional grid-shaped network in a computation unit 50 including 27 computation nodes 51. In this regard, here, the parallel computer 5 includes 45 computation units 50. For three any integers i, j, and k, it is possible for the parallel computer 5 to include i × j × k computation units 51.

Next, a detailed description will be given of the execution node selection unit 44. FIG. 6 is a diagram illustrating a configuration of the execution node selection unit 44. As illustrated in FIG. 6, the execution node selection unit 44 includes a candidate shape calculation unit 441, a position acquisition unit 442, a transformation unit 443, a node identification unit 444, and an inverse transformation unit 445.

The candidate shape calculation unit 441 calculates a candidate of a three-dimensional shape formed by a plurality of computation nodes 51 to which a job is assigned from a job shape specified by a user. If specification of a user job is a three-dimensional shape (X, Y, Z) with X, Y, Z, which are all different with one another, (X, Y, Z), and (X, Z, Y), (Y, Z, X), (Y, X, Z), (Z, X, Y), and (Z, Y, X), which are produced by rotating (X, Y, Z), are candidate shapes. Here, (X, Y, Z) represents a cuboid having X × Y × Z.

In this regard, if any two values from X, Y, and Z are the same, a cuboid having a replaced value that is the same as another value of the original cuboid comes to have the same shape. For example, if X = Y, (X, Y, Z) and (Y, X, Z) become the same shape.

If specification of a user job is a two-dimensional shape (X, Y), (X, Y, 1) and the shape produced by rotating (X, Y, 1) are the candidate shapes. Also, if an area having a length b from the large physical axis z forming the virtual axis Z, and a length a (a is an axis length of the small physical axis w) from the small physical axis w is cut out, (X0, Y0, a*b) also becomes a candidate shape with respect to a combination of any integers X0, Y0, a, and b that satisfy X0*a >= X, and Y0*b >= Y. Here, "*" denotes multiplication. Also, (Y0, X0, a*b) is also a candidate shape.

Also, the virtual axis X is decomposed into the original physical axes in the same manner as the virtual axis Z, (a*b, X0, Y0), and (a*b, Y0, X0) are also shape candidates with respect to a combination of any integers X0, Y0, a, and b that satisfy X0*a >= X, and Y0*b >= Y. Note that a is an axis length of the small physical axis x. Also, the virtual axis Y is decomposed into the original physical axes in the same manner as the virtual axis Z, (X0, a*b, Y0), and (Y0, a*b, X0) are also shape candidates with respect to a combination of any integers X0, Y0, a, and b that satisfy X0*a >= X, and Y0*b>=Y. Note that a is an axis length of the small physical axis y.

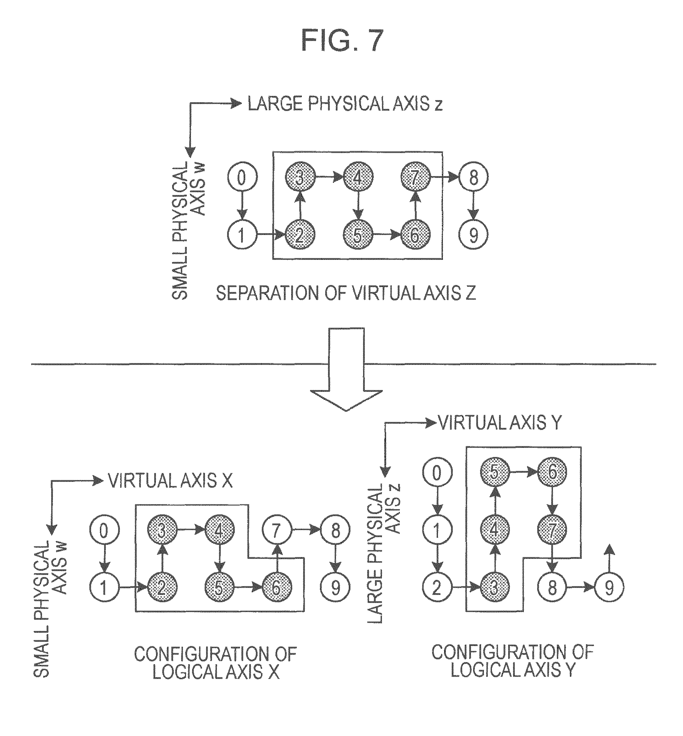

Also, it is possible to obtain another shape candidate by separating the virtual axis Z, and including the separated axis with the virtual axis X and the virtual axis Y. FIG. 7 is a diagram for explaining separation of the virtual axis Z. FIG. 7 illustrates a case where the job shape specified by the user is 5 × 5, and the axis length a of the small physical axis w is 2.

Since X0*2 >= 5, X0 becomes 3, and for example, if b is 3, since Y0*b >= 5, Y0 becomes 2. That is to say, if an area having a length 3 is cut out from the large physical axis z forming the virtual axis Z, and length 2 is cut out from the small physical axis w, (X0, Y0, a*b) = (3, 2, 6) becomes a shape candidate.

Here, the virtual axis Z is decomposed into the small physical axis w and the large physical axis z, the small physical axis w is included in the virtual axis X in order to correspond to the logical axis X having the shape specified by the user, and the large physical axis z is included in the virtual axis Y in order to correspond to the logical axis Y having the shape specified by the user. Then, it is possible to obtain a candidate shape of 5 × 5 by selecting five computation nodes "2" to "6" from an axis produced by combining the small physical axis w and the virtual axis X, and selecting five computation nodes "3" to "7" from an axis produced by combining the large physical axis z and the virtual axis Y.

That is to say, shape candidates are obtained not only from a three-dimensional space formed by virtual axes produced by the combination of a large physical axis and a small physical axis, but also from a two-dimensional space formed by a virtual axis produced by the combination of two large physical axes and one small physical axis, and a virtual axis produced by a combination of one large physical axis and two small physical axes.

If specification of a user job is one-dimensional shape (X), (X0, Y0, Z0) is a candidate shape with respect to the combination of any integers X0, Y0, and Z0 that satisfy X0*Y0*Z0 >= X.

The position acquisition unit 442 obtains, from the node information management unit 42, positions of the computation nodes 51, which are not allocated to the other jobs, among the computation nodes 51 that are not broken down.

The transformation unit 443 transforms the six-dimensional coordinates of the position obtained by the position acquisition unit 442 into the three-dimensional coordinates of a virtual space. The transformation unit 443 transforms the coordinates using the following transformation expression, for example. In this regard, in the following transformation expression, the six-dimensional coordinates are assumed to be (x0, y0, z0, u0, v0, w0), and the three-dimensional coordinates are assumed to be (X0, Y0, Z0).

When x0 is an even number, if X0 = x0*(u-axis length) + u0x0 is an odd number, X0 = x0*(u-axis length) + (u-axis length) - 1 - u0.

When y0 is an even number, if Y0 = y0*(v-axis length) + v0y0 is an odd number, Y0 = y0*(v-axis length) + (v-axis length) - 1 - v0.

When z0 is an even number, if Z0 = z0*(w-axis length) + w0z0 is an odd number, Z0 = z0*(w-axis length) + (w-axis length) - 1 - w0.

For example, in FIG. 1A, if (x0, u0) = (0, 2), X0 = 0*3 + 2 = 2, and if (x0, u0) = (1, 2), X0 = 1*3 + 3 -1 - 2 = 3. Also, in FIG. 1A, if (x0, u0) = (2, 0) X0 = 2*3 + 0 = 6, and if (x0, u0) = (3, 2), X0 = 3*3 + 3 -1 - 2 = 9.

In this regard, here, the transformation unit 443 transforms the six-dimensional coordinates into the three-dimensional coordinates in the virtual space. However, it is possible for the node information management unit 42 to manage the position of a computation node 51 in the three-dimensional coordinates in the virtual space, and to pass the three-dimensional coordinates to the execution node selection unit 44.

The node identification unit 444 searches for a position that matches the candidate shape calculated by the candidate shape calculation unit 441 in the virtual space, and identifies the computation node 51 to which the job is assigned. When the node identification unit 444 identifies the computation nodes 51 to which the job is assigned, if there is a plurality of positions that matches the candidate shape, the node identification unit 444 identifies the computation nodes 51 to which the job is assigned based on the position that was found first.

Alternatively, when the node identification unit 444 searches for a position that matches the candidate shape in the virtual space, it is possible to make a search so as to leave a free space as large as possible. Here, the free space means a space formed by the computation node 51 whose use state is "free", and whose operating state is "normal". In this regard, it is possible for the node identification unit 444 to identify a computation node 51 to which the job is assigned based on the position that was found first during the search.

The inverse transformation unit 445 transforms each of the computation nodes 51 identified by the node identification unit 444 from the three-dimensional virtual coordinates to the original six-dimensional physical coordinates. The calculation expression that transforms coordinates from the three-dimensional virtual coordinates (X0, Y0, Z0) to the six-dimensional physical coordinates (x0, y0, z0, u0, v0, w0) is as follows. In this regard, hereinafter for integers p and q, "p/q" denotes a quotient when p is divided by q, and "p%q" denotes a remainder when p is divided by q.

If a remainder when x0 = X0/(the u-axis length)X0 is divided by (the u-axis length)*2 is less than the u-axis length, u0 = X0%(the u-axis length), whereas in the other cases, u0 = (u-axis length)-1-X0%(u-axis length).

If a remainder when y0 = Y0/(the v-axis length)Y0 is divided by (the v-axis length)*2 is less than the v-axis length, v0 = Y0%(the v-axis length), whereas in the other cases, v0 = (the v-axis length) - 1 - Y0%(the v-axis length).

If a remainder when z0 = Z0/(the w-axis length)Z0 is divided by (the w-axis length)*2 is less than the w-axis length, w0 = Z0%(the w-axis length), whereas in the other cases, w0 = (the w-axis length) - 1 - Z0%(the w-axis length).

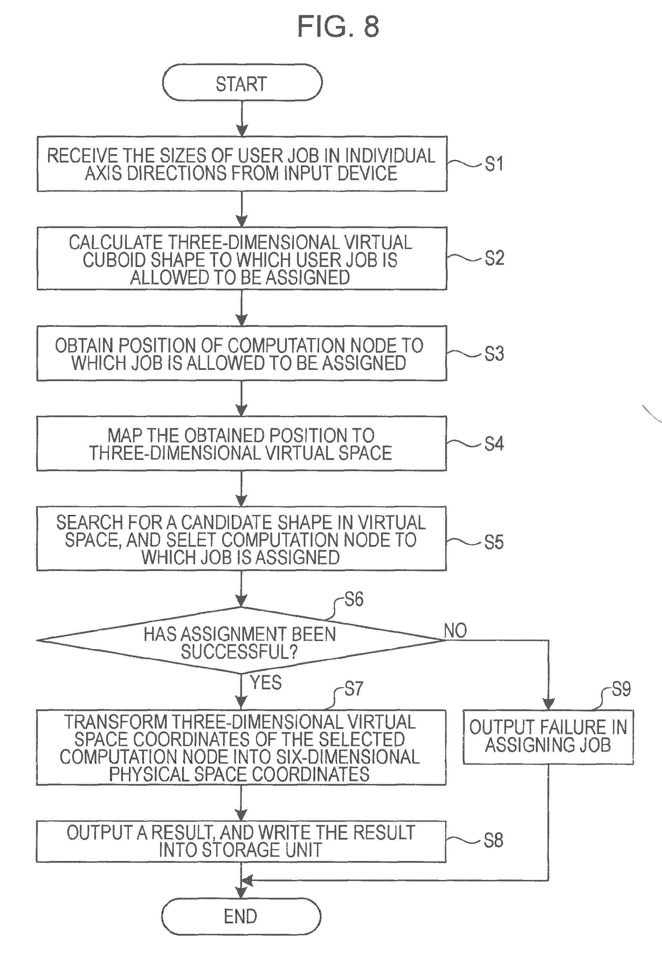

Next, a description will be given of a processing flow of job assignment by the control unit 4 according to the embodiment. FIG. 8 is a flowchart illustrating job assignment by the control unit 4 according to the embodiment. As illustrated in FIG. 8, the control unit 4 receives the sizes of individual axis directions of the user job from the input device 2 (step S1).

Then, the control unit 4 calculates a three-dimensional virtual cuboid shape to which the user job is allowed to be assigned, that is to say, a candidate shape (step S2). Then, the control unit 4 obtains the position of the computation node 51 to which the user job is allowed to be assigned (step S3), and maps the obtained position onto a three-dimensional virtual space (step S4).

Then, the control unit 4 searches for a candidate shape in the virtual space, and selects a computation node 51 to which a job is assigned (step S5). Then, the control unit 4 determines whether assignment of the job has been successful (step S6).

As a result, if the assignment of the job has been successful, the control unit 4 transforms the three-dimensional virtual space coordinates of the selected computation node 51 into the six-dimensional physical space coordinates (step S7), outputs the assignment result to the output device 3, and writes the assignment result into the storage unit 43 (step S8). On the other hand, if the assignment of the job has not been successful, the control unit 4 outputs a failure in the assignment of the job to the output device 3 (step S9).

As described above, in the embodiment, the control unit 4 configures a virtual axis in combination of the large physical axis and the small physical axis of the parallel computer system 1, and the execution node selection unit 44 assigns a job for each computation node in the three-dimensional virtual space formed by the three virtual axes. Accordingly, it is possible for the control unit 4 to get rid of unused computation nodes 51 that occur at the time of assigning a job for each computation unit 50, and to restrain the deterioration of the operating ratio of the parallel computer system 1.

Also, in the embodiment, when combining the large physical axis and the small physical axis to configure the virtual axis, the control unit 4 configures the virtual axis such that the computation nodes 51 that are adjacent on the virtual axis are also adjacent on the physical axis. Accordingly, it is possible for the parallel computer system 1 to avoid an increase in the communication time between the computation nodes 51.

In this regard, when the large physical axis and the small physical axis are combined to configure the virtual axis, there are cases where some of the computation nodes 51 to which a job is assigned correspond to a computation unit 50. In such a case, it is possible for the control unit 4 to assign a job using a related-art method of assigning in the computation unit 50.

Also, in the embodiment, a description will be given of the case where the control unit 4 assigns all the jobs for each computation node. However, it is possible for the user to specify whether to assign a job for each computation node or to assign a job for each computation unit 50, and for the control unit 4 to assign a job based on specification by the user.

It is possible for the user to assign a job for each computation unit 50 so as to obtain the advantages as follows:
- A logical axis viewed by the user is allowed to have a ring-shaped torus structure.
- It is possible to constitute a logical axis having a torus structure even if a broken computation node is included.

Also, in the embodiment, the position acquisition unit 442 obtains the positions of the computation nodes 51 to which a job has not been assigned among the unbroken computation nodes 51, and the transformation unit 443 transforms the positions obtained by the position acquisition unit 442 from the six-dimensional coordinates into the three-dimensional coordinates in the virtual space. Accordingly, it is possible for the control unit 4 to grasp the positions of the computation nodes 51 to which another job is assigned among the computation nodes 51 that are not broken in the virtual space.

Also, in the embodiment, the candidate shape calculation unit 441 calculates a candidate of the three-dimensional shape formed by a plurality of computation nodes 51 to which the job is assigned from a job shape specified by the user as a candidate shape including a case where the shape formed by the computation nodes 51 is different from the job shape. Then, the execution node selection unit 44 selects a computation node 51 based on the candidate shape calculated by the candidate shape calculation unit 441. Accordingly, it is possible for the control unit 4 to select a job-assignable computation node 51 including a case where the shape formed by the computation nodes 51 is different from the job shape, and thus it is possible to increase a ratio of successful selection.

In this regard, in the embodiment, a description has been given of the control unit 4. However, it is possible to obtain a control program having the same functions by achieving the configuration held by the control unit 4 by software. Thus, a description will be given of a computer that executes the control program.

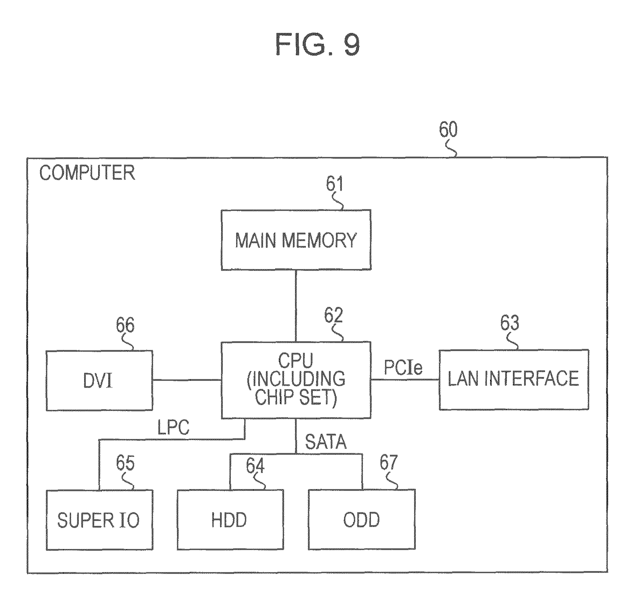

FIG. 9 is a diagram illustrating a hardware configuration of a computer that executes the control program according to the embodiment. As illustrated in FIG. 9, the computer 60 includes a main memory 61, a CPU 62, a local area network (LAN) interface 63, and a hard disk drive (HDD) 64. Also, the computer 60 includes a super input output (IO) 65, a digital visual interface (DVI) 66, and an optical disk drive (ODD) 67.

The main memory 61 is a memory for storing programs, and an interim execution result of the program, and the like. The CPU 62 is a central processing unit that reads the program from the main memory 61 to execute the program.

The CPU 62 includes a chip set having a memory controller.

The LAN interface 63 is an interface for connecting the computer 60 to another computer through a LAN. The HDD 64 is a disk storage for storing programs and data, and the super IO 65 is an interface for connecting an input device, such as a mouse, a keyboard, and the like. The DVI 66 is an interface for connecting a liquid crystal display unit, and the ODD 67 is a device for reading and writing a DVD.

The LAN interface 63 is connected to the CPU 62 through the PCI Express, and the HDD 64 and the ODD 67 are connected to the CPU 62 through the serial advanced technology attachment (SATA). The super IO 65 is connected to the CPU 62 through the low pin count (LPC).

Then, the control program that is executed on the computer 60 is stored in the DVD, and is read by the ODD 67 to be installed into the computer 60. Alternatively, the control program is stored in a database, or the like of another computer system connected through the LAN interface 63, and is read from such a database to be installed into the computer 60. Then, the installed control program is stored in the HDD 64, and is read to the main memory 61 to be executed by the CPU 62.

Also, in the embodiment, a description has been given of the case where the parallel computer 5 has a large physical axis and a small physical axis. However, the present disclosure is not limited to this. It is possible to apply the present disclosure in the same manner to the case of having a plurality of physical axes regardless of the difference in sizes. That is to say, it is possible to apply the present disclosure in the same manner to the case where the parallel computer does not include a computation unit 50, and a plurality of computation nodes 51 are connected through an N-dimensional mesh network.

Also, in the embodiment, a description has been given of the case where one virtual axis is configured by combining one large physical axis and one small physical axis. However, the present disclosure is not limited to this. It is possible to apply the present disclosure in the same manner to the case where one virtual axis is configured by combining three physical axes or more.

Also, in the embodiment, a description has been given of the case where the computation nodes 51 are disposed in a six-dimensional physical space in the parallel computer 5. However, the present disclosure is not limited to this. It is possible to apply the present disclosure in the same manner to the case where computation nodes are disposed in a higher-dimensional or lower-dimensional physical space in a parallel computer. Also, in the embodiment, a description has been given of the case where the number of dimensions of the virtual space is three. However, the present disclosure is not limited to this. It is possible to apply the present disclosure in the same manner to the case where the number of dimensions of the virtual space is higher dimensions or lower dimensions.

Also, in the embodiment, a description has been given of the case where a plurality of computation units 50 is connected to the three-dimensional grid-shaped state. However, the present disclosure is not limited to this. It is possible to apply the present disclosure in the same manner to the case where a plurality of computation units 50 is connected in a three-dimensional ring-shaped state through a three-dimensional torus network. Also, in the embodiment, a description has been given of the computation unit 50 when a plurality of computation nodes 51 is connected in a three-dimensional ring-shaped state through a three-dimensional torus network. However, the present disclosure is not limited to this. It is possible to apply the present disclosure in the same manner to the computation unit when a plurality of computation nodes 51 is connected in a three-dimensional grid-shaped state.

## Claims

1. A parallel computer system including a plurality of computation nodes, connected with one another through a grid-shaped or a ring-shaped network in a physical space including a plurality of physical axes, and configured to execute jobs, respectively, and a control unit configured to control the plurality of computation nodes,
the control unit comprising:
an accepting unit configured to accept a job;
a selection unit configured to select a computation node to which the accepted job is assigned among the plurality of computation nodes in a virtual space having a same number of dimensions of a virtual axis combining the physical axes as a number of dimensions requested by the job accepted by the accepting unit; and
an instruction unit configured to instruct the parallel computer system so as to execute the job using the computation node selected by the selection unit.

2. The parallel computer system according to claim 1,
wherein the selection unit is configured to select a computation node to which the job is assigned in a virtual space in which adjacent computation nodes in the virtual axis have a same number of virtual axes adjacent with each other on any of the combined physical axes as the number of dimensions.

3. The parallel computer system according to claim 1 or claim 2,
wherein the selection unit includes
a coordinate identification unit configured to identify coordinates in the virtual space of each of the computation nodes, to which the job is allowed to be assigned, and
a node identification unit configured to identify a computation node to which the job is assigned based on the coordinates identified by the coordinate identification unit.

4. The parallel computer system according to claim 3,
wherein the coordinate identification unit includes
an acquisition unit configured to acquire coordinates in the physical space of each of the computation nodes, to which the job is allowed to be assigned, and
a transformation unit configured to transform the coordinates obtained by the acquisition unit for each of the computation nodes into coordinates in the virtual space.

5. The parallel computer system according to claim 3,
wherein the coordinate identification unit includes
a storage unit configured to store coordinates of each of the computation nodes in the virtual space, and
an acquisition unit configured to acquire coordinates of each of the computation nodes, to which the job is allowed to be assigned, from the storage unit.

6. The parallel computer system according to any one of claims 1 to 5, wherein the accepting unit is configured to accept a shape of a job,
the control unit further includes a candidate calculation unit configured to calculate a candidate having a three-dimensional shape formed by a computation node capable of executing the job having the shape accepted by the accepting unit, and
the selection unit is configured to select a computation node to which the job is assigned in the virtual space based on the candidate calculated by the candidate calculation unit.

7. A control unit configured to control a plurality of computation nodes, connected with one another through a grid-shaped or a ring-shaped network in a physical space including a plurality of physical axes, and configured to execute jobs, respectively, the control unit comprising:
an accepting unit configured to accept a job;
a selection unit configured to select a computation node to which the accepted job is assigned among the plurality of computation nodes in a virtual space having a same number of dimensions of a virtual axis combining the physical axes as a number of dimensions requested by the job accepted by the accepting unit; and
an instruction unit configured to instruct the parallel computer system so as to execute the job using the computation node selected by the selection unit.

8. A method of controlling a parallel computer system including a plurality of computation nodes, connected with one another through a grid-shaped or a ring-shaped network in a physical space including a plurality of physical axes, and configured to execute jobs, respectively, and a control unit configured to control the plurality of computation nodes,
the method comprising:
accepting a job;
selecting a computation node to which the accepted job is assigned among the plurality of computation nodes in a virtual space having a same number of dimensions of a virtual axis combining the physical axes as a number of dimensions requested by the job accepted by the accepting unit; and
instructing the parallel computer system so as to execute the job using the computation node selected by the selecting.

9. A computer program containing program code which, when executed by a computer, causes the computer to perform the method according to claim 8.

10. A computer-readable storage medium storing therein a computer program according to claim 9.
